# EUROPÄISCHE PATENTSCHRIFT

(11) **EP 0 521 370 B1**
(45) Veröffentlichungstag und Bekanntmachung des Hinweises auf die Patenterteilung: **31.05.1995**
(21) Anmeldenummer: 92110549.0
(22) Anmeldetag: 23.06.1992
(51) Int. Cl.: F16F 1/44, F16F 7/00, F16F 1/36, F16F 1/37

(54) **Schwingungsdämpfer**
Vibration damper
Amortisseur de vibrations

(30) Priorität: 05.07.1991 DE 9108306 U
(43) Veröffentlichungstag der Anmeldung: 07.01.1993
(73) Patentinhaber: D. F. Patent AG Société Anonyme, 2953 Luxembourg (LU)
(72) Erfinder: Schmidt, Alfred, D-3577 Neustadt/Hessen (DE)
(74) Vertreter: Olbricht, Karl Heinrich, Dipl.-Phys.

(56) Entgegenhaltungen:
- DE-A- 3 808 574
- DE-U- 7 314 561
- GB-A- 1 041 233

## Beschreibung

Die vorliegende Erfindung betrifft einen Schwingungsdämpfer gemäß dem Oberbegriff von Anspruch 1.

Er eignet sich zur Verwendung als Untersatz unter schweren Körpern, die selbst Schwingungen erzeugen oder Erschütterungen ausgesetzt sind. Dies können z.B. Geräte und insbesondere größere Maschinen wie schnellaufende Wirk- und Webmaschinen, Druckmaschinen u.dgl. sein.

Für Waschmaschinen sind in der DE-A1-3 904 361 Vibrations- und Lärmdämpfer vorgeschlagen worden, die aus zwei Krallen-Dämpfungsplatten mit einander entgegengerichteten Dornen und einem beide umschließenden Ring bestehen. Das Material ist Gummi oder elastischer Kunststoff; die Wirkung ist daher auf verhältnismäßig geringe Lasten begrenzt und auch nur vorhanden, solange kein sogenanntes Dichtsetzen eingetreten ist.

Ein Puffer mit einem Kolben innerhalb eines topfförmigen Gehäuses ist Gegenstand von DE-U-1 948 218. Dabei ist das Gehäuse mit Hartschaumstoff gefüllt, und der im Gehäuse gleitend geführte Kolben preßt diese Füllung. Mangels Isoliermaßnahmen ist eine Körperschall-Übertragung unvermeidlich und der Dämpfungseffekt durch das Dichtsetzen des zum Teil auch noch flüssigkeitsgetränkten Füllmaterials eng begrenzt.

Ein vergleichbares Auflager ist in der GB-A-1 041 233 beschrieben, wobei zur seitlichen Abstützung zusätzliche Ringe oder Abstandstücke aus Polytetrafluorethylen (PTFE) vorgesehen sind. Dieser Werkstoff ist nicht nur relativ teuer, sondern auch in bestimmter Konfiguration nicht ganz einfach am Auflager anzubringen.

Entsprechendes gilt für ein Heizkessel-Auflager gemäß DE-U-7 314 561, wonach ein Oberrahmen auf einer Dichtungsmasse schwimmt, die in einem Unterrahmen gehalten ist. Eine solche Lagerung erfordert regelmäßig zwei Schichten aus festem Material, z.B. trittfeste Isoliermatten aus Steinwolle, und zusätzlich Weichgummi-Randstücke. Selbst wenn nur eine Schicht vorhanden ist, benötigt die herkömmliche Lagerung eine obere Randaussparung zwecks Einfassung durch einen Rahmen, was eine spezielle Fertigung voraussetzt.

Es ist ein wichtiges Ziel der Erfindung, hier Abhilfe zu schaffen und mit möglichst einfachen und wirtschaftlichen Mitteln einen verbesserten Schwingungsdämpfer zu schaffen. Die neue Vorrichtung soll bequem sowie kostengünstig zu fertigen und leicht montierbar sein; im Betrieb aufgestellter Maschinen soll sie eine wirksame Dämpfung der Übertragung von Lärm und Vibrationen gewährleisten.

Hauptmerkmale der Erfindung sind in Anspruch 1 angegeben. Ausgestaltungen sind Gegenstand der Ansprüche 2 bis 8.

Bei einem Schwingungsdämpfer mit einem insbesondere topfförmigen Gehäuse, das einen Boden sowie eine geschlossene Wandung aufweist und eine elastische Füllung enthält, die aus einem zelligen Elastomer wie Polyurethan besteht und einen im Gehäuse geführten Kolben axial stützt, sieht die Erfindung laut Anspruch 1 vor, daß die Füllung im Gehäuse durch den Kolben unter Vorspannung gehalten ist, der zumindest im wesentlichen körperschallisoliert im Radialabstand zu der Wandung angeordnet und am oberen Gehäuserand gegen Axialbewegung nach oben punktuell gesichert ist. Der so ausgebildete Schwingungsdämpfer arbeitet nach dem bekannten Prinzip des schwimmenden Estrichs, wobei durch die Körperschallisolierung des Kolbens eine außerordentlich hohe Dämpfung von Vibrationen bzw. Erschütterungen erreicht wird. Die Konstruktion ist ebenso einfach wie übersichtlich; sie besteht nur aus wenigen Teilen und kann den unterschiedlichsten Bedürfnissen bequem angepaßt werden. Mit geeigneten Abmessungs-Verhältnissen kann man den unterschiedlichsten Anwendungs-Erfordernissen Rechnung tragen. Stets ist die elastische Füllung aus Zellmaterial durch den Kolben unter Vorspannung gehalten, so daß sich die punktuelle Axialsicherung nur auf den Ruhefall (Lieferzustand) bezieht. Unter Belastung wird die Vorspannung überwunden, die Füllung weiter komprimiert und daher Berührungsfreiheit zwischen den Axialsicherung und dem Kolben gewährleistet. Eine schalleitende Verbindung ist also im Gebrauch nicht vorhanden, so daß - wie praktische Tests bewiesen haben - eine hervorragende Körperschall-Isolierung erzielt wird.

Sehr vorteilhaft ist es, wenn gemäß Anspruch 2 die elastische Füllung einen Luftanteil aufweist und vorzugsweise am Kolbenumfang mit der Umgebungsluft in Verbindung steht. Der dadurch mögliche Luftaustausch verhindert eine übermäßige Erwärmung das Dämpfungsmaterials. In Verbindung mit der Maßnahme von Anspruch 3, wonach die Füllung aus Polyurethan-Schnitzeln besteht, deren geschlossenzelliger Aufbau eine besonders günstige elastische Dämpfung erzeugt, hat man einen kombinierte Dämpfungsmaterial-Luft-Feder, deren Charakteristik je nach Anwendungsfall leicht eingestellt werden kann, namentlich auch durch Wahl der Vorspannung. Die Strömungsverbindung mit der Umgebungsluft stellt dabei sicher, daß die im Betrieb entwickelte Wärme insbesondere am Gehäuseumfang einfach durch Konvektion fortlaufend abgeführt wird. Auch im Dauerbetrieb erreicht der Schwingungsdämpfer infolgedessen nur mäßige Temperaturen, so daß die Standzeiten herkömmlicher Dämpfungselemente bei weitem übertroffen werden. Dazu trägt besonders bei, daß die Füllung Hartschaumstoff-Stücke aus zelligem Polyurethan auf Isocyanatbasis aufweist, namentlich auf der Basis von Naphthylendiisocyanat. Das können unregelmäßig geformte Materialreste sein, insbesondere Mahlgut, Stanzabfälle u.dgl., die ohne diese Verwendung auf Sondermüll-Deponien landen müßten, nun jedoch mit vollem Recycling-Effekt im erfindungsgemäßen Schwingungsdämpfer genutzt werden.

Speziell sieht Anspruch 4 vor, daß zwischen Kolben und Gehäuse-Wandung eine elastisch-isolierende Umfangs-Abstützung vorhanden ist, die nach Anspruch 5 von einem Streifen oder Ring aus zelligem Material gebildet sein kann, der in einer Umfangsnut des Kolbens sitzt und diese radial überragt. Das gewährleistet eine berührungsfreie Führung des Kolbens oberhalb der Füllung im Gehäuse, wobei Umfangs-Zwischenräume vorhanden sei können, die dem Luftaustausch dienen.

Laut Anspruch 6 kann die Sicherung des Kolbens aus wenigstens drei am oberen Gehäuserand angeordneten, eine Isolierhülle aufweisenden Gewindebolzen bestehen. Die Beschränkung der Axialsicherung auf wenige Punkte mit zusätzlicher Isolierung trägt wesentlich dazu bei, daß von der aufgestellten Maschine stammender Körperschall nicht an das Gehäuse durchläuft, sondern von der Füllung abgedämpft wird.

Für die Aufstellung es vorteilhaft, wenn gemäß Anspruch 7 der Kolben im wesentlichen eben und an seiner Oberseite mit einer Aufnahme für einen Standfuß, Stehbolzen o.dgl. versehen ist. Dies ermöglicht die Anbringung an Geräten bzw. Maschinen unterschiedlichster Art.

Eine zusätzliche Maßnahme besteht nach Anspruch 8 darin, daß der Boden des Gehäuses auf einer körperschallisolierenden Unterlage ruht, insbesondere einer Platte aus geschlossenzelligem Polyurethan. Das bewirkt eine weitere Dämpfung des Gehäuses gegenüber den Fußboden und ist überall dort anwendbar, wo kein vibrationsbedingtes Abwandern der Schwingungsdämpfer oder Maschinenfüße befürchtet werden muß.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:
- Fig. 1: eine Axialschnittansicht eines Schwingungsdämpfers,
- Fig. 2: eine Draufsicht auf den Schwingungsdämpfer von Fig. 1 und
- Fig.3: eine auseinandergezogene Ansicht, teilweise im Schnitt, von Bestandteilen des Schwingungsdämpfers nach Fig. 1 bzw. 2.

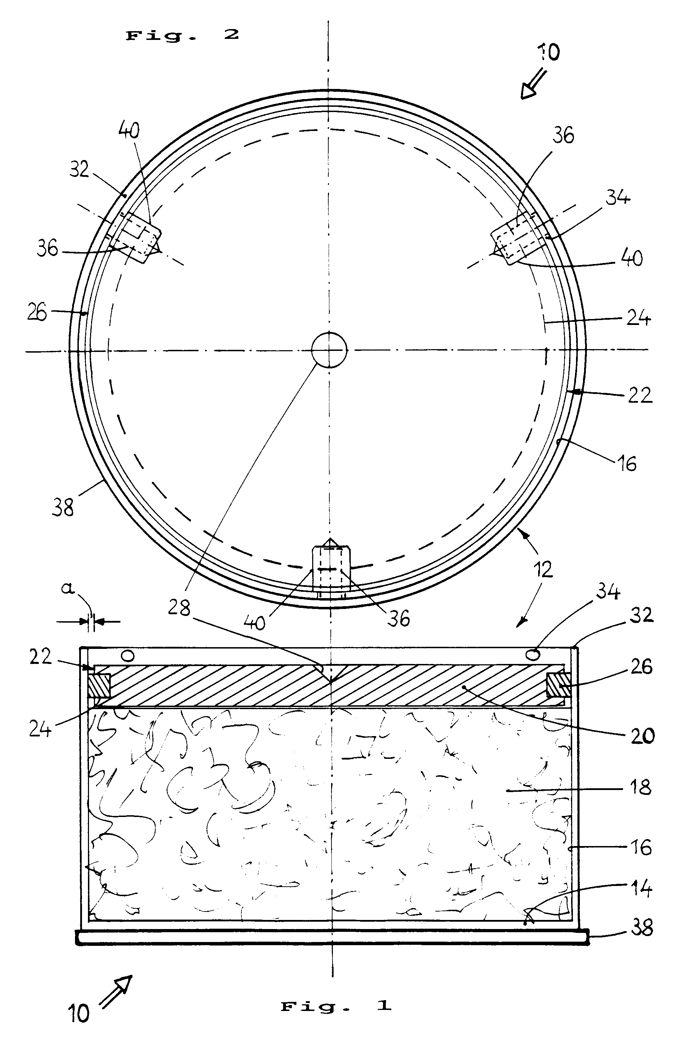

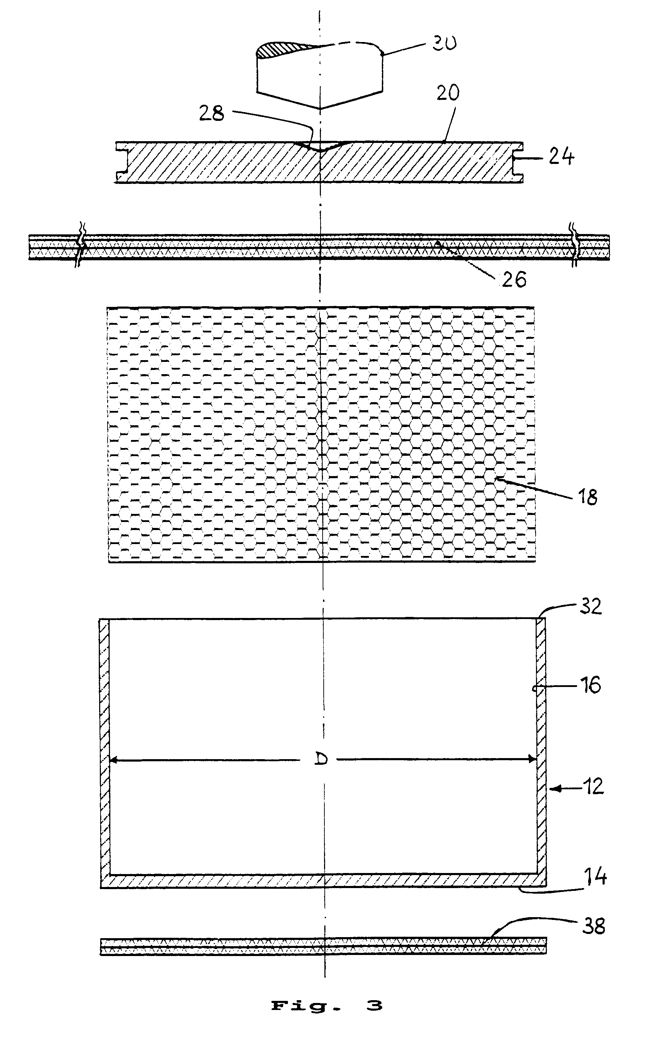

Der dargestellte Schwingungsdämpfer 10 hat ein Gehäuse 12 mit einem Boden 14, an das eine zylindrische Wandung 16 anschließt. Es nimmt eine Füllung 18 auf, die aus Hartschaumstoff-Stücken eines zelligen Elastomers besteht, vorzugsweise aus geschlossenzelligem Polyurethan. Diese Füllung 18 besteht insbesondere aus unregelmäßig geformten Stücken, wie in Fig. 1 schematisch verdeutlicht; in Fig. 3 ist der Einfachheit halber zwar ein regelmäßiges Muster gezeichnet, doch soll auch hier eine Füllung 18 aus ungleichmäßigen Körpern Bestandteil des Schwingungsdämpfers 10 sein.

Auf der Füllung 18 ruht ein Kolben 20, der an seinem Umfang 22 einen Radialabstand a zur Wandung 16 des Gehäuses 12 hat (Fig. 1). In einer Umfangsnut 24 des Kolbens 20 sitzt ein Ring oder Streifen 26, der die Radialabstützung zur Gehäuse-Wandung 16 hin übernimmt. Der Kolben 20 ist als Standplatte oder Auflage ausgebildet und hat insbesondere zentrisch eine Aufnahmehöhlung 28 für einen Standfuß 30, der in Fig. 3 angedeutet ist.

Die in das Gehäuse 12 eingefüllte Dämpfungsmasse 18 wird durch den Kolben 20 samt Abstands- und Dichtungsring 26 mit bestimmtem Druck vorbelastet. Ist die gewählte Vorbelastung erreicht, so wird der Kolben bzw. die Standplatte 20 gegen eine Axialbewegung nach oben mit Gewindebolzen 36 gesichert, die in zugeordnete Gewindelöcher 34 am oberen Rand 32 des Gehäuses 12 eingeschraubt werden. Vorzugsweise sind drei (oder vier) Gewindelöcher 34 gleichmäßig über den Umfang verteilt, und auf die Gewindebolzen 36 können Isolierhüllen 40 aufgesteckt sein (Fig. 2), welche zur Isolierung des Gehäuserandes 32 gegenüber dem Kolben 20 beitragen. Der Durchmesser D (Fig. 3) des Gehäuses 12 sowie der Durchmesser des Kolbens 20 sind nach Bedarf wählbar. Wichtig ist jedoch, daß zur Innenwandung 16 hin ein Radialabstand a vorhanden ist, so daß der Kolben 20 gegenüber dem Gehäuse 12 isoliert bleibt. Eine punktuelle Überbrückung durch die Sicherungs-Gewindebolzen 36 wird mittels der Isolierhüllen 40 abgedämpft.

Der Schwingungsdämpfer 10 eignet sich als Untersatz unter schnellaufenden Maschinen, gegebenenfalls mit einer zusätzlichen Unterplatte 38 (Fig. 1 und 3), die ebenfalls aus geschlossenzelligem Polyurethan bestehen kann.

Bevorzugt findet als Füllung 18 ein Dämpfungsmaterial Verwendung, das aus Stanzresten, Mahlgut und Abfällen besteht, die - statt auf Sondermülldeponien zu landen - im erfindungsgemäßen Schwingungsdämpfer 10 mit vollem Recycling-Effekt genutzt werden. Die unregelmäßige Form der Hartschaumstoff-Stücke und die Zellstruktur der Füllung 18 bewirken eine hervorragende Körperschalldämmung. Besonders geeignet sind zellige Polyurethane auf der Basis von Naphthylendiisocyanat. Die große Volumenkompressibilität, die sich bei der Gestaltung und Bemessung der Bauteile gezielt ausnutzen läßt, trägt besonders zu sehr günstigen Dämmwerten bei, die mit kompakten Materialien nicht erzielbar sind.

Die Erfindung ist nicht auf die dargestellte Ausführungsform beschränkt; vielmehr sind dem Fachmann zahlreiche Abwandlungen möglich. Man erkennt jedoch, daß bei einer bevorzugten Ausführung ein Schwingungsdämpfer 10 ein topfähnliches Gehäuse 12 mit Boden 14 und Wandungen 16 hat. Auf einer Füllung 18 aus Dämpfungsmaterial sitzt ein Kolben 20 in Gestalt einer Standplatte oder Auflage mit einer Umfangsnut, die einen Abstands- bzw. Dichtungsring 26 haltert, um zwischen Kolben 20 und Gehäuse-Wandung 16 einen Radialabstand a zu gewährleisten. Die namentlich aus Stanzabfällen, Mahlgut o.dgl. bestehende Füllung 18 kann im Gehäuse 12 unter Vorspannung stehen; der Kolben 20 ist am oberen Gehäuserand 32 durch Gewindebolzen 36 punktuell axialgesichert, die vorzugsweise eine Isolierhülle 40 tragen.

### Bezugszeichen-Liste

- a: Radialabstand
- D: Durchmesser
- 10: Schwingungsdämpfer
- 12: Gehäuse
- 14: Boden
- 16: Wandung
- 18: Füllung
- 20: Kolben
- 22: Kolbenumfang
- 24: Umfangsnut
- 26: Ring/Streifen
- 28: Aufnahme(höhlung)
- 30: Standfuß
- 32: oberer Rand
- 34: Gewindelöcher
- 36: Gewindebolzen
- 38: Platte
- 40: Isolierhülle

## Patentansprüche

1. Schwingungsdämpfer (10) mit einem insbesondere topfförmigen Gehäuse (12), das einen Boden (14) sowie eine geschlossene Wandung (16) aufweist und eine elastische Füllung (18) enthält, die aus einem zelligen Elastomer wie Polyurethan besteht und einen im Gehäuse (12) geführten Kolben (20) axial stützt, dadurch **gekennzeichnet**, daß die Füllung (18) im Gehäuse (12) durch den Kolben 20 unter Vorspannung gehalten ist, der zumindest im wesentlichen körperschallisoliert im Radialabstand (a) zu der Wandung (16) angeordnet und am oberen Gehäuserand (32) gegen Axialbewegung nach oben punktuell gesichert ist.

2. Schwingungsdämpfer nach Anspruch 1, dadurch **gekennzeichnet**, daß die elastische Füllung (18) einen Luftanteil aufweist und vorzugsweise am Kolbenumfang (22) mit der Umgebungsluft in Verbindung steht.

3. Schwingungsdämpfer nach Anspruch 1 oder 2, dadurch **gekennzeichnet**, daß die Füllung (18) Hartschaumstoff-Stücke aufweist, die unregelmäßig geformte Materialreste sind, z.B. Mahlgut, Stanzabfälle u.dgl. aus zelligem Polyurethan auf Isocyanatbasis, namentlich auf der Basis von Naphthylendiisocyanat.

4. Schwingungsdämpfer nach Anspruch 3, dadurch **gekennzeichnet**, daß zwischen Kolben (20) und Gehäuse-Wandung (16) eine elastisch-isolierende Umfangs-Abstützung (26) vorhanden ist, insbesondere aus Polyurethan auf Isocyanatbasis

5. Schwingungsdämpfer nach Anspruch 4, dadurch **gekennzeichnet**, daß die Umfangs-Abstützung von einem Streifen oder Ring (26) aus zelligem Material gebildet ist, der in einer Umfangsnut (24) des Kolbens (20) sitzt und diese radial überragt.

6. Schwingungsdämpfer nach einem der Ansprüche 1 bis 5, dadurch **gekennzeichnet**, daß die Sicherung des Kolbens (20) aus wenigstens drei am oberen Gehäuserand (32) angeordneten, eine Isolierhülle (40) aufweisenden Gewindebolzen (36) besteht.

7. Schwingungsdämpfer nach einem der Ansprüche 1 bis 6, dadurch **gekennzeichnet**, daß der Kolben (20) im wesentlichen eben und an seiner Oberseite mit einer Aufnahme (28) für einen Standfuß (30), Stehbolzen o.dgl. versehen ist.

8. Schwingungsdämpfer nach einem der Ansprüche 1 bis 7, dadurch **gekennzeichnet**, daß der Boden (14) des Gehäuses (12) auf einer körperschallisolierenden Unterlage ruht, insbesondere auf einer Platte (36) aus geschlossenzelligem Polyurethan.

## Claims

1. Vibration damper (10) comprising an especially pot-shaped housing (12) which includes a bottom (14) and a closed wall (16) as well as an elastic filling (18) which consists of a cellular elastomer, such as polyurethane, and axially supports a piston (20) guided in said housing (12),
**characterized** in that said filling (18) is preloaded in said housing (12) by said piston (20) which is arranged at a radial distance (a) relative to said wall (16) such that it is at least substantially insulated to prevent transmission of structure-borne sound, and is secured at certain points on the upper housing edge (32) against axial upward movement.

2. The vibration damper according to claim 1,
**characterized** in that said elastic filling (18) comprises an air portion and is in communication with ambient air preferably on the piston circumference (22).

3. The vibration damper according to claim 1 or 2,
**characterized** in that said filling (18) comprises pieces of rigid cellular material having irregularly shaped material residues, such as ground material, punchings or the like of cellular polyurethane based on isocyanate, especially naphthylene diisocyanate.

4. The vibration damper according to claim 3,
**characterized** in that an elastically insulating circumferential support (26), especially made of polyurethane based on isocyanate, is provided between piston (20) and housing wall (16).

5. The vibration damper according to claim 4,
**characterized** in that said circumferential support is formed by a strip or ring (26) of cellular material which is seated in a circumferential groove (24) of said piston (20) and radially projects thereover.

6. The vibration damper according to any one of claims 1 to 5, **characterized** in that the securing means for said piston (20) consists of at least three threaded bolts (36) that are arranged on the upper housing edge (32) and have an insulating covering (40).

7. The vibration damper according to any one of claims 1 to 6, **characterized** in that said piston (20) is substantially even and is provided on its upper side with an accommodation (28) for a stand (30), for stay bolts, or the like.

8. The vibration damper according to any one of claims 1 to 7, **characterized** in that said bottom (14) of said housing (12) rests on a support with structural sound insulation, in particular on a plate (36) of closed-cell polyurethane.

## Revendications

1. Amortisseur de vibrations (10) avec un boîtier (12) notamment en forme de pot, lequel possède un fond (14) et une paroi fermée (16) et contient une masse de remplissage élastique (18) se composant d'un élastomère alvéolé comme du polyuréthane et soutenant axialement un piston (20) conduit dans le boîtier (12), CARACTERISE EN CE QUE la masse de remplissage (18) est précontrainte dans le boîtier (12) par le piston (20), celui-ci étant situé à une distance radiale (a) de la paroi (16) de manière à être isolé au moins essentiellement contre les bruits de structure, et étant assuré ponctuellement sur le bord supérieur (32) du boîtier contre les mouvements axiaux vers le haut.

2. Amortisseur de vibations selon la revendication 1, CARACTERISE EN CE QUE la masse de remplissage élastique (18) contient une certaine quantité d'air et est en contact avec l'air ambiant de préférence au niveau de la périphérie du piston (22).

3. Amortisseur de vibrations selon l'une des revendications 1 ou 2, CARACTERISE EN CE QUE la masse de remplissage (18) possède des morceaux de mousse de polyuréthane rigide, qui sont en restes de matériaux de forme irrégulière, par exemple de la matière moulue, des déchets de poinçonneuse ou autres, se composant de polyuréthane alvéolé sur une base d'isocyanate, notamment sur une base de naphtylène-diisocyanate.

4. Amortisseur de vibrations selon la revendication 3, CARACTERISE EN CE QU'entre le piston (20) et la paroi (16) du boîtier se trouve un support périphérique (26) élastique et isolant, notamment en polyuréthane sur une base d'isocyanate.

5. Amortisseur de vibrations selon la revendication 4, CARACTERISE EN CE QUE le support périphérique se compose d'une bande ou bague (26) en matériau alvéolé, qui est logée dans une rainure circonférentielle (24) du piston (20) et qui dépasse radialement ce dernier.

6. Amortisseur de vibrations selon l'une des revendications 1 à 5, CARACTERISE EN CE QUE le dispositif de sécurité du piston (20) se compose d'au moins trois boulons filetés (36) situés sur le bord supérieur du boîtier (32) et possèdant une gaine isolante (40).

7. Amortisseur de vibrations selon l'une des revendications 1 à 6, CARACTERISE EN CE QUE le piston (20) est fondamentalement plat et est pourvu sur son côté supérieur d'un creux de positionnement (28) pour un pied (30), un étai ou autres.

8. Amortisseur de vibrations selon l'une des revendications 1 à 7, CARACTERISE EN CE QUE le fond (14) du boîtier (12) repose sur un socle isolant des bruits de structure, en particulier sur une plaque (36) de polyuréthane à alvéoles fermées.
